Europäisches Patentamt

(19) European Patent Office

Office européen des brevets

(11) Veröffentlichungsnummer: **0 248 971**
**B1**

(12) **EUROPÄISCHE PATENTSCHRIFT**

(45) Veröffentlichungstag der Patentschrift:
03.01.90

(51) Int. Cl.⁴: **C21C 5/56, F27D 13/00**

(21) Anmeldenummer: 86890116.6

(22) Anmeldetag: 28.04.86

(54) Einrichtung zum Vorwärmen von Schrott.

(43) Veröffentlichungstag der Anmeldung:
16.12.87 Patentblatt 87/51

(45) Bekanntmachung des Hinweises auf die Patenterteilung:
03.01.90 Patentblatt 90/1

(84) Benannte Vertragsstaaten:
AT BE DE FR GB IT LU

(56) Entgegenhaltungen:
DE-A- 2 118 069
DE-B- 2 302 012
FR-A- 1 387 077
US-A- 3 645 515

IRON AND STEEL ENGINEER, Band 60, Nr. 11,
November 1983, Seiten 54-61, Pittsburgh, Pennsylvania,
US; T. KISHIDA et al.: "Scrap preheating by exhaust gas
from electric arc furnaces"

(73) Patentinhaber: VOEST-ALPINE
INDUSTRIEANLAGENBAU GESELLSCHAFT m b.H.,
Turmstrasse 44, A-4020 Linz(AT)

(72) Die Erfinder haben auf ihre Nennung verzichtet

(74) Vertreter: Wolfram, Gustav, Dipl.-Ing.,
Schwindgasse 7 P.O. Box 205, A-1041 Wien(AT)

## Beschreibung

Die Erfindung betrifft eine Einrichtung zum Vorwärmen von Schrott, mit einem Schrottbehandlungsofen, in den mindestens eine Abgasleitung eines metallurgischen Ofens, insbesondere eines Konverters, mündet.

Zur Vorwärmung des Schrottes ist es bekannt, den Schrott in den Konverter zu chargieren und durch Zufuhr von Brenngasen innerhalb des Konverters zu erwärmen. Ein zufriedenstellender Wirkungsgrad ergibt sich hierbei nur bei bodenblasenden Konvertern, da nur bei solchen Konvertern eine vollständige Umspülung des Schrottes mit Brenngasen möglich ist. Für Aufblaskonverter (LD-Konverter) ist es notwendig, den Schrott in mehreren Portionen einzubringen und die jeweils eingebrachte Portion mittels eigens installierter Brennerlanzen vorzuwärmen. Dabei ist jedoch die Umspülung des Schrottes mangelhaft und es ergeben sich längere Chargenzeiten.

Da durch die Vorwärmung des Schrottes im Konverter der Zeitabstand aufeinanderfolgender Chargen vergrößert wird, ist man dazu übergegangen, den Schrott außerhalb des Konverters vorzuwärmen, wobei es bekannt ist, eigene fremd beheizte Öfen einzusetzen. Die Wärmeübertragung erfolgt bei solchen Öfen im wesentlichen durch Strahlung des Heizgases.

Bei der sich zwangsläufig einstellenden Schichtlagerung des Schrottes innerhalb des Ofens wird jedoch jeweils nur die dem Heizgas zugewandte oberste Schrottschicht ausreichend erwärmt, so daß nur ein geringer Wirkungsgrad erzielt werden kann. Dieser kann durch Verwendung eines Drehrohrofens zwar verbessert werden, jedoch ist dann eine kostenaufwendige Aufbereitung des Schrottes erforderlich, damit die Umschichtungen des Schrottes und dessen Transport innerhalb des Drehrohrofens möglich sind.

Aus der DE-B 2 302 012 ist eine Einrichtung zum Vorwärmen von Schrott bekannt, die eine Mehrzahl von nebeneinander angeordneten rohrförmigen, vertikal gerichteten Schrottbehältern aufweist, die jeweils mit einer Gaseintritts- und einer Gasaustrittsöffnung versehen sind. Jeder Schrottbehälter ist von einem Tragmantel gebildet, der innenseitig mit einer Wärmeisolierschicht bedeckt ist, an die ein Innenmantel anschließt. Die Gaseintritts- und Gasaustrittsöffnungen benachbarter Schrottbehälter sind durch ortsfeste Kanäle bzw. ortsfeste Rohre verbunden. Die Schrottbehälter selbst werden von einer als Hubbalkensystem ausgebildeten Fördereinrichtung taktweise bewegt, so daß ein Schrottbehälter einmal nach oben und einmal nach unten von warmem Gas durchströmt wird. Der bei der Einrichtung an erster Stelle stehende Schrottbehälter ist von einem Heizdeckel bedeckt, an dem Brenner vorgesehen sind.

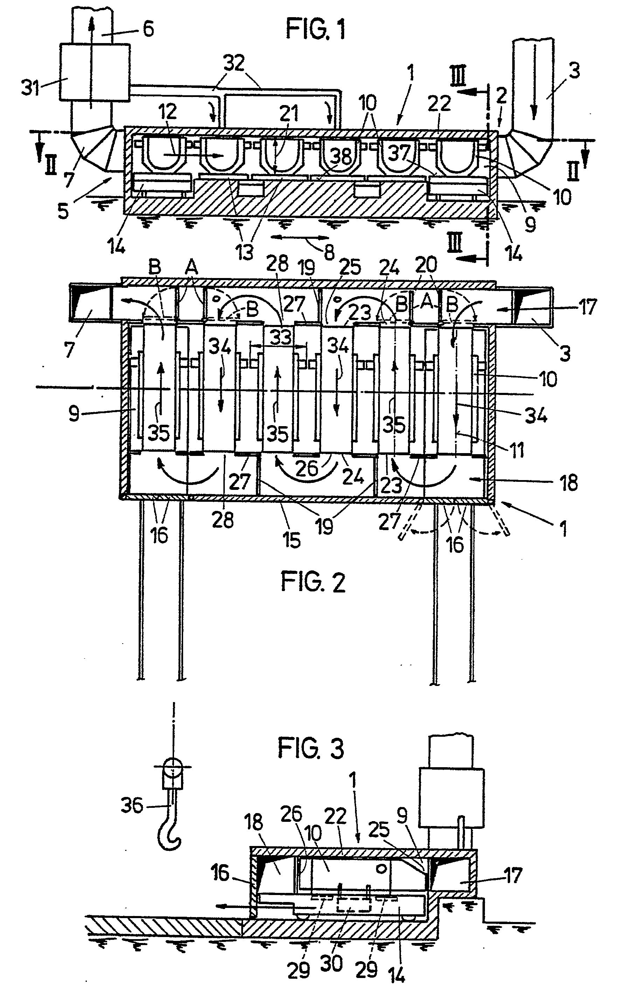

Ein Schrottbehandlungsofen gemäß der eingangs beschriebenen Art, bei dem die Abgase eines Elektroofens durchgeleitet werden, ist aus Iron and Steel Engineer, November 1983, Seite 56, Fig. 3 bekannt. Hierbei ergibt sich wiederum die Problematik des geringen Wirkungsgrades aufgrund der zufälligen Schichtlagerung des Schrottes innerhalb des Schrottbehandlungsofens.

Die Erfindung bezweckt die Vermeidung dieser Nachteile und Schwierigkeiten und stellt sich die Aufgabe, eine Einrichtung der eingangs beschriebenen Art zu schaffen, bei der die Abgase eines metallurgischen Ofens zur Vorwärmung von Schrott ausgenützt werden können, wobei jedoch ein hoher Wirkungsgrad sichergestellt ist. Zudem soll eine Umschichtung des Schrottes beim Ein- und Ausgeben in bzw. aus dem Schrottbehandlungsofen bzw. vor dem Chargieren in den metallurgischen Ofen vermieden werden.

Diese Aufgabe wird erfindungsgemäß dadurch gelöst, daß der Schrottbehandlungsofen eine Durchgangskammer für eine Mehrzahl von neben- bzw. übereinander angeordneten Schrottschurren aufweist, die mit einem offenen Ende und am gegenüberliegenden Ende mit einer gasdurchlässigen Wand, vorzugsweise mit einem Gitter bzw. Rost, versehen sind, wobei der Schrottbehandlungsofen an einem Ende der Durchgangskammer eine mindestens eine Schrottschurre aufnehmende Chargiervorrichtung und an dem anderen Ende der Durchgangskammer eine mindestens eine Schrottschurre aufnehmende Dechargiervorrichtung aufweist, und daß innerhalb der Durchgangskammer eine Fördereinrichtung zum taktweisen Bewegen der Schrottschurre von der Chargiervorrichtung zur Dechargiervorrichtung sowie Gasleiteinrichtungen zum Verbinden eines Endes einer Schrottschurre mit dem Ende einer benachbarten Schrottschurre angeordnet sind.

Eine bevorzugte Ausführungsform, die eine besonders kompakte Bauart des Schrottbehandlungsofens bewirkt, ist dadurch gekennzeichnet, daß der Schrottbehandlungsofen zwei Längskanäle aufweist, von denen je einer seitlich der Durchgangskammer und parallel zu dieser liegt, wobei jeder Längskanal mit Gasleiteinrichtungen ausgestattet ist.

Hierbei sind zweckmäßig die Schrottschurren in der Durchgangskammer mit ihrer Längsachse quer zur Förderrichtung der Schrottschurren abgestellt und liegen mit ihren beiden Enden jeweils bei die Durchgangskammer mit den Längskanälen verbindenden Gasdurchgangsöffnungen.

Eine strömungstechnisch günstige Bauweise wird vorteilhaft dadurch erreicht, daß die Gasleiteinrichtungen als die Längskanäle nach jeder zweiten Schrottschurre absperrende Wände ausgebildet sind, wobei jeweils eine Wand des einen Längskanales etwa mittig zwischen zwei benachbarten Wänden des anderen Längskanales angeordnet ist. Hierdurch ist es möglich, die Abluft des metallurgischen Ofens fortlaufend durch die nebeneinander abgestellten Schrottschurren zu leiten, wobei jedoch eine kurze Bauweise des Ofens und infolge der geringen vom Abgas zurücklegenden Wege eine besonders effektive Ausnützung der Abgase erzielt wird.

Vorzugsweise ist die Chargier- und Dechargiervorrichtung jeweils als quer zur Förderrichtung der Schrottschurren in der Durchgangskammer in den Schrottbehandlungsofen einfahrender Wagen ausgebildet, wobei die Wagenplattformen einen Teil des Ofenbodens bilden, wodurch das Ein- und Ausbringen der Schrottschurren schnell und einfach zu bewerkstelligen ist.

Um die Abgase des metallurgischen Ofens auf besonders kurzem Weg unter weitgehender Vermeidung von Wärmeverlusten in den Schrottbehandlungsofen einbringen zu können, ist zweckmäßig der Schrottbehandlungsofen in einer Höhe über dem metallurgischen Ofen angeordnet.

Hierbei weist vorteilhaft die Chargier- und Dechargiervorrichtung jeweils eine quer zur Förderrichtung der Schrottschurren in der Durchgangskammer zum Schrottbehandlungsofen in vertikaler Richtung hebbare, den Wagen aufnehmende Hubvorrichtung auf.

Gemäß einer weiteren bevorzugten Ausführungsform ist die Chargier- und Dechargiervorrichtung als unterhalb des Schrottbehandlungsofens in horizontaler Richtung parallel zur Förderrichtung der Schrottschurren in der Durchgangskammer verfahrbarer Hubwagen mit einer bis in das Innere des Schrottbehandlungsofens einfahrbaren Hebebühne ausgebildet.

Um beim Chargieren und Dechargieren möglichst keine Gasverluste in Kauf nehmen zu müssen, sind zweckmäßig die nächst der Enden eines Längskanales angeordneten Gasleiteinrichtungen als bewegbare Wände, insbesondere als Schwenkklappen ausgebildet, die aus einer den Längskanal absperrenden Position in eine den Längskanal freigebende Position bzw. umgekehrt bewegbar sind.

Um ein Verbrennen des CO-Anteiles des Konverterabgases zu ermöglichen, ist vorteilhaft an einer Gasableitung des Schrottbehandlungsofens ein einer Luftvorwärmung dienender Wärmetauscher vorgesehen, von dem Warmluftleitrohre in den Innenraum des Schrottbehandlungsofens münden.

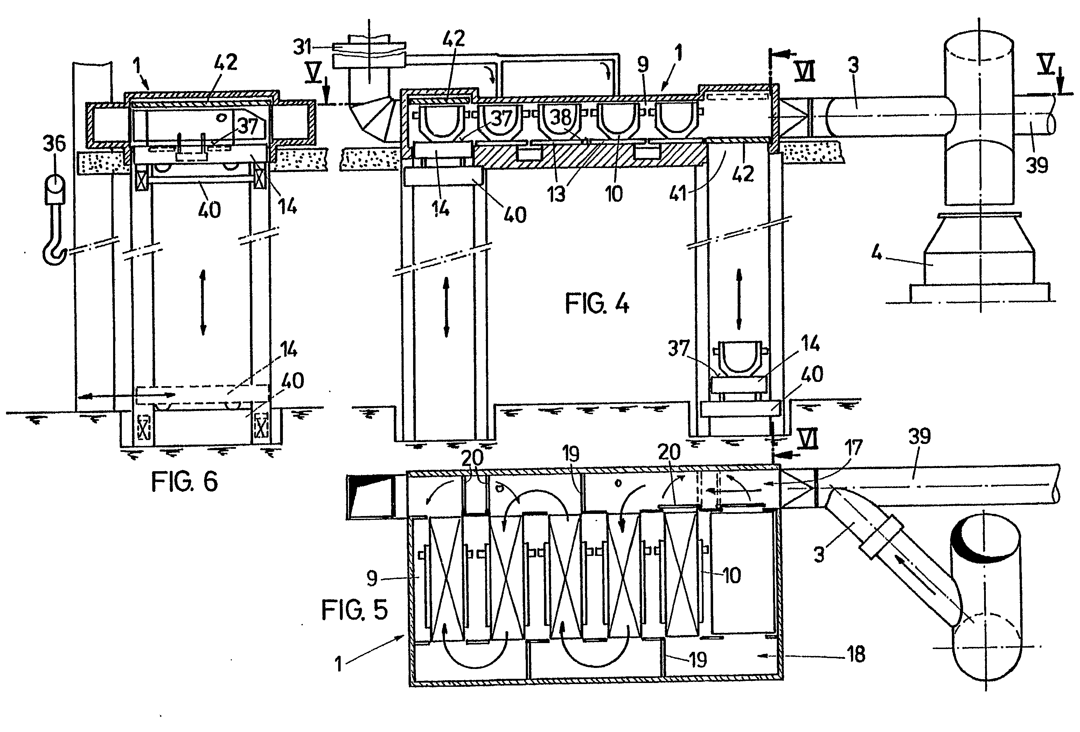

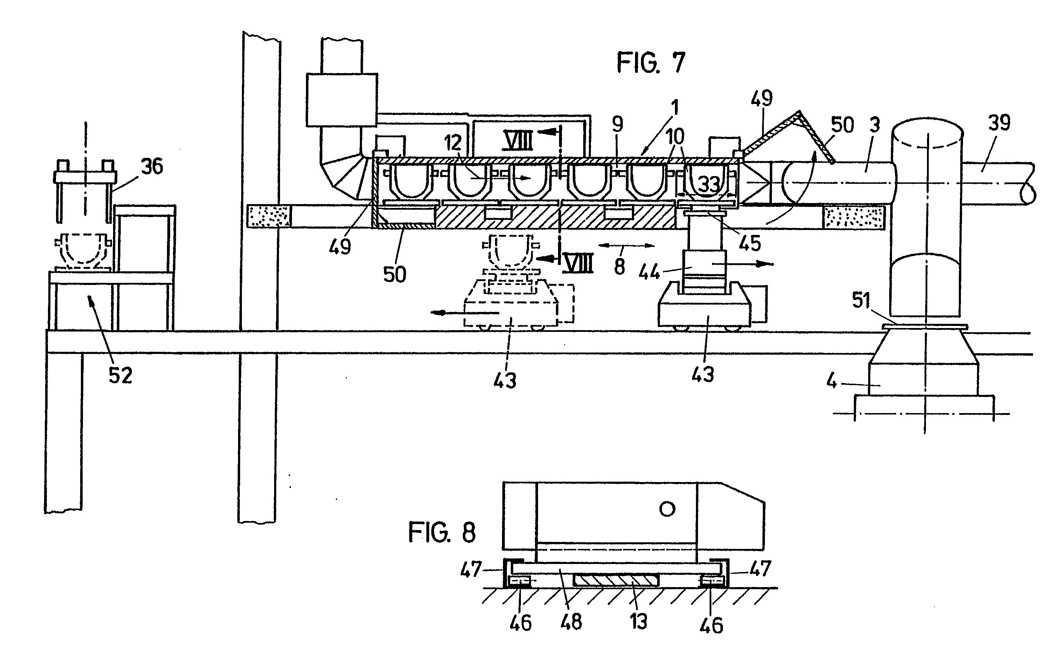

Die Erfindung ist nachfolgend anhand der Zeichnung an drei Ausführungsbeispielen näher erläutert, wobei Fig. 1 einen Längsschnitt durch die erfindungsgemäße Einrichtung gemäß einer ersten Ausführungsform, Fig. 2 einen Schnitt gemäß der Linie II–II der Fig. 1 und Fig. 3 einen Schnitt gemäß der Linie III–III der Fig. 1 zeigen. In den Fig. 4 bis 6 ist in zu den Fig. 1 bis 3 analoger Darstellung eine weitere Ausführungsform veranschaulicht. Fig. 7 zeigt in zu Fig. 1 analoger Darstellung eine dritte Ausführungsform. Fig. 8 gibt ein Detail der Fig. 7 im vergrößerten Maßstab und in Seitenansicht wieder.

Mit 1 ist generell ein Schrottbehandlungsofen bezeichnet, in den an einem Ende 2 eine Abgasleitung 3 eines Konverters 4 (vgl. Fig. 4) einmündet und an dessen anderem Ende 5 eine an einen Kamin 6 angeschlossene Ableitung 7 für das durch den Schrottbehandlungsofen hindurchgeleitete Abgas anschließt. Der Schrottbehandlungsofen 1 weist eine zentrale, sich in seiner Längsrichtung 8 erstreckende Durchgangskammer 9 zur Aufnahme von Schrottschurren 10 auf. Die Schrottschurren 10 sind mit ihrer Längsachse 11 quer zur Längsrichtung 8 des Schrottbehandlungsofens 1 in diesen eingesetzt und sie werden durch die Durchgangskammer 9 in der durch den Pfeil 12 veranschaulichten Richtung mittels einer Fördereinrichtung 13, die z.B. als Hubbalkenförderer ausgebildet ist, taktweise hindurchbewegt.

Zum Chargieren und Dechargieren der Schrottschurren 10 dient ein an jeweils einem Ende 2, 5 des Schrottbehandlungsofens 1 quer zur Förderrichtung 12 verfahrbar angeordneter Wagen 14. Die Wagen 14 sind bis in die Durchgangskammer 9 fahrbar; die isolierte Außenwand 15 des Schrottbehandlungsofens weist zu diesem Zweck Einfahrtstore 16 auf.

Beiderseits der Durchgangskammer 9 ist parallel zu dieser jeweils ein innerhalb der Außenwand 15 liegender Längskanal 17, 18 angeordnet, dessen Querschnitt etwa dem einer Schrottschurre 10 entspricht. Die Abgasleitung 3 mündet in einen dieser Längskanäle (17) an einem Ende des Schrottbehandlungsofens; die Ableitung 7 schließt am gegenüberliegenden Ende dieses Längskanales 17 an. Innerhalb der Längskanäle sind Gasleiteinrichtungen 19, 20 vorgesehen, die als quer zur Längsrichtung der Längskanäle 17, 18 liegende Wände ausgebildet sind. Es ist jeweils eine Wand 19 nach zwei benachbarten Schrottschurren 10 angeordnet, wobei jeweils eine Wand 19, 20 des einen Längskanales 17 etwa mittig zwischen zwei benachbarten Wänden 19 des anderen Längskanales 18 angeordnet ist. Hierdurch wird, wie insbesondere aus Fig. 2 ersichtlich ist, eine meanderartige Durchleitung des Abgases des Konverters 4 durch sämtliche im Schrottbehandlungsofen 1 eingebrachte Schrottschurren 10 erzielt.

Die Höhe 21 der Durchgangskammer 9 des Schrottbehandlungsofens 1 ist so gewählt, daß die Oberkanten der Schrottschurren 10 nur knapp unterhalb der Decke 22 des Ofens 1 zu liegen kommen, ein Fördern mittels der Fördereinrichtung 13 jedoch möglich ist.

Die Schrottschurren weisen eine Gaseintrittsöffnung 23 und am gegenüberliegenden Ende eine Gasaustrittsöffnung 24 auf, wobei eine dieser Öffnungen vom offenen Ende 25 der Schrottschurre 10 und die gegenüberliegende Öffnung jeweils durch eine gasdurchlässige Wand 26, vorzugsweise eine gitter- bzw. rostartige Wand gebildet ist.

Die Längskanäle 17, 18 sind gegen die Durchgangskammer 9 durch Längswände 27 getrennt, die Gasdurchgangsöffnungen 28 aufweisen, deren Querschnitt dem freien Querschnitt der Schrottschurren 10 angepaßt ist. Die Gasdurchlaßöffnungen 28 sind jeweils im Abstand zweier benachbarter Schrottschurren 10 angeordnet, so daß zwischen den Schrottschurren 10 keine Gase hindurchströmen können.

An dem Wagen 14 angeordnete Rollenwalzen 29 erlauben den Quertransport einer Schrottschurre 10 von einem dieser Wagen 14 auf die Fördereinrichtung 13 oder von dieser auf einen dieser Wagen 14, wobei der Quertransport mittels einer am Wagen 14 oder ortsfest angeordneten Verschiebevorrichtung 30 erfolgt.

Wie aus Fig. 2 ersichtlich ist, sind die an den Enden des Längskanales 17, in den die Abgasleitung 3 einmündet, angeordneten Gasleiteinrichtungen 20 als schwenkbare Klappen, die aus einer den Längskanal 17 absperrenden Position A in eine den Längskanal freigebende Position B und umgekehrt bewegbar sind, ausgebildet, so daß die ersten und die letzten beiden Plätze für die Schrottschurren 10 während des Chargierens bzw. Dechargierens vom Abgas nicht bestrichen werden, wodurch es möglich ist, einen Gasverlust während des Chargierens bzw. Dechargierens zu vermeiden.

Die Ableitung 7 ist mit einem Wärmetauscher 31 zur Vorwärmung von Luft versehen, wobei die im Wärmetauscher 31 erwärmte Luft über Warmluftleitrohre 32 dem Innenraum des Schrottbehandlungsofens 1 zugeleitet wird, um den im Konverterabgas enthaltenen CO-Anteil zu verbrennen. Die bei der Vorwärmung des Schrottes gemeinsam mit diesem erhitzten Kunststoff- und Ölrückstände bzw. deren bei der Vorwärmung entstehenden Dämpfe können dadurch ebenfalls gezielt verbrannt werden.

Infolge des taktweisen Weiterbewegens der Schrottschurren um jeweils einen Betrag, der der Breite 33 einer Schrottschurre 10 entspricht, werden die Schrottschurren 10 einmal in der einen Richtung 34 und einmal in der entgegengesetzten Richtung 35 vom Konverterabgas durchströmt, so daß die zuerst als Gaseintrittsöffnung 23 fungierende Öffnung einer Schrottschurre 10 anschließend als Gasaustrittsöffnung 24 fungiert und umgekehrt. Dieser periodische Wechsel der Durchströmungsrichtung bewirkt eine allseitige Umspülung und damit eine gleichmäßige Erwärmung des Schrottes.

An den Schrottschurren 10 sind zweckmäßig nicht dargestellte Leitbleche in der Weise angeordnet, daß Abweichungen des Abgasstromes von der gewünschten Richtung - also der Längsachse 11 der Schrottschurren 10 - weitgehend verhindert werden. Die Schrottschurren 10 sind aus hochwarmfestem Material gefertigt.

Mit dem taktweisen Vorschub der Schrottschurren erfolgt jeweils die Chargierung bzw. Dechargierung einer Schrottschurre.

Die in Fig. 1 dargestellte Anordnung des Schrottbehandlungsofens 1 auf dem Hüttenflur ergibt den Vorteil der einfachen Chargierung bzw. Dechargierung. Die am Schrottplatz gefüllte Schrottschurre 10 wird vom Schrottkran 36 auf den Wagen 14 abgesetzt, der die Schrottschurre 10 in den Schrottbehandlungsofen 1 fährt. Innerhalb des Ofens bildet die Wagenplattform 37 einen Teil des Ofenbodens 38. Nach der Dechargierung einer Schrottschurre 10 und Weiterrücken der Schrottschurren 10 in der Durchgangskammer um einen Platz (im Gegenstrom zur Konverterabgasdurchleitung) wird die als zuletzt eingebrachte Schrottschurre 10 mittels der Verschiebevorrichtung 30 vom Wagen 14 auf die innerhalb des Schrottbehandlungsofens angeordnete Transporteinrichtung 13 aufgesetzt, so daß der Wagen 14 den Ofen zwecks Neuchargierung einer Schrottschurre 10 verlassen kann.

Gemäß der in den Fig. 4 bis 6 dargestellten Ausführungsform ist der Schrottbehandlungsofen 1 in einer Höhe oberhalb des Konverters 4 angeordnet, wodurch es möglich ist, die Konverterabgase auf kurzem Weg über die Abgasleitung 3 direkt dem Schrottbehandlungsofen 1 zuzuführen. Die Abgasleitung mündet hierbei in eine von weiteren Konvertern kommende Hauptabgasleitung 39, so daß eine möglichst kontinuierliche Beaufschlagung des Schrottbehandlungsofens 1 mit Konverterabgas möglich ist.

Die Chargier- und die Dechargiervorrichtung sind hierbei jeweils als quer zur Förderrichtung 12 der Schrottschurren 10 in der Durchgangskammer 9 vertikal fahrbare Hebevorrichtung 40 ausgebildet, auf die ein mit der Schrottschurre beladener Wagen 14 gefahren werden kann. Bei Anheben des Wagens 14 gelangt dieser durch eine Bodenöffnung 41 des Schrottbehandlungsofens in die Durchgangskammer 9. Die Wagenplattform 37 bildet nach Einbringen des Wagens 14 in den Schrottbehandlungsofen 1 wiederum einen Teil dessen Bodens 38. Befinden sich die Wagen 14 während des Chargierens bzw. Dechargierens außerhalb des Schrottbehandlungsofens 1, sind dessen Bodenöffnungen 41 durch einen vertikal heb- und senkbaren Deckel 42 geschlossen.

Die in Fig. 7 dargestellte Ausführungsform weist als Chargier- und als Dechargiervorrichtung je einen unterhalb des Schrottbehandlungsofens 1 in horizontaler Richtung und parallel zur Förderrichtung 12 der Schrottschurren 10 in der Durchgangskammer 9 verfahrbaren Hubwagen 43 auf, der mit einem Hubwerk 44, welches eine die Schrottschurre 10 tragende Hebebühne 45 aufweist, versehen ist. Innerhalb des Schrottbehandlungsofens 1 sind mit Rollen 46 ausgestattete Führungsschienen 47 vorgesehen, die entlang der Bodenplatten 48 der Schrottschurren 10 geführt sind. Das Chargieren und Dechargieren der Schrottschurren erfolgt durch Einfädeln der Bodenplatten 48 der Schrottschurren 10 in diese Führungsschienen 47 durch Verfahren des Hubwagens 43 in Längsrichtung 8 des Schrottbehandlungsofens 1. Zu diesem Zweck sind die Stirnwände 49 der Durchgangskammer gemeinsam mit einem Bodenteil 50, dessen Breite der Breite 33 einer Schrottschurre 10 entspricht, aufschwenkbar.

Mittels des Hubwagens 43 läßt sich eine dechargierte Schrottschurre 10 direkt zur Konvertermündung 51 verfahren, und der Schrott kann durch Kippen der Schrottschurre 10 in den Konverter 4 entleert werden. Nach Entleeren der Schrottschurre 10 fährt der Hubwagen 43 unter dem Schrottbehandlungsofen 1 durch bis zu einem im Bereich eines Hebezeuges 36 liegenden Abstellplatz 52, wo die leere Schrottschurre 10 gegen eine frisch gefüllte Schrottschurre 10 ausgetauscht wird.

Die Erfindung beschränkt sich nicht auf die dargestellten Ausführungsbeispiele, sondern kann in verschiedener Hinsicht modifiziert werden. Beispielsweise ist es möglich, mehrere Schrottschurren 10 gleichzeitig zu chargieren und zu dechargieren, wobei die Schrottschurren neben- oder übereinander angeordnet sein können.

## Patentansprüche

1. Einrichtung zum Vorwärmen von Schrott, mit einem Schrottbehandlungsofen (1), in den mindestens eine Abgasleitung (3) eines metallurgischen Ofens, insbesondere eines Konverters (4), mündet, dadurch gekennzeichnet, daß der Schrottbehandlungsofen (1) eine Durchgangskammer (9) für eine Mehrzahl von neben- bzw. übereinander angeordneten Schrottschurren (10) aufweist, die mit einem offenen Ende (25) und am gegenüberliegenden Ende mit einer gasdurchlässigen Wand (26) versehen sind, wobei der Schrottbehandlungsofen (1) an einem Ende (5) der Durchgangskammer (9) eine mindestens eine Schrottschurre (10) aufnehmende Chargiervorrichtung (14; 40; 43) und an dem anderen Ende (2) der Durchgangskammer (9) eine mindestens eine Schrottschurre (10) aufnehmende Dechargiervorrichtung (16; 40; 43) aufweist, und daß innerhalb der Durchgangskammer (9) eine Fördereinrichtung (13) zum taktweisen Bewegen der Schrottschurre (10) von der Chargiervorrichtung (14; 40; 43) zur Dechargiervorrichtung (16; 40; 43) sowie Gasleiteinrichtungen (19, 20) zum Verbinden eines Endes einer Schrottschurre (10) mit dem Ende einer benachbarten Schrottschurre (10) angeordnet sind.

2. Einrichtung nach Anspruch 1, dadurch gekennzeichnet, daß der Schrottbehandlungsofen (1) zwei Längskanäle (17, 18) aufweist, von denen je einer seitlich der Durchgangskammer (9) und parallel zu dieser liegt, wobei jeder Längskanal (17, 18) mit Gasleiteinrichtungen (19, 20) ausgestattet ist.

3. Einrichtung nach Anspruch 1 oder 2, dadurch gekennzeichnet, daß die Schrottschurren in der Durchgangskammer (9) mit ihrer Längsachse (11) quer zur Förderrichtung (12) der Schrottschurren (10) abgestellt sind und mit ihren beiden Enden jeweils bei die Durchgangskammer (9) mit den Längskanälen (17, 18) verbindenden Gasdurchgangsöffnungen (28) liegen.

4. Einrichtung nach Anspruch 3, dadurch gekennzeichnet, daß die Gasleiteinrichtungen (19, 20) als die Längskanäle (17, 18) nach jeder zweiten Schrottschurre (10) absperrende Wände ausgebildet sind, wobei jeweils eine Wand (19) des einen Längskanales (17) etwa mittig zwischen zwei benachbarten Wänden (19) des anderen Längskanales (18) angeordnet ist.

5. Einrichtung nach Anspruch 1 oder 2, dadurch gekennzeichnet, daß die Chargier- und Dechargiervorrichtung jeweils als quer zur Förderrichtung (12) der Schrottschurren (10) in der Durchgangskammer (9) in den Schrottbehandlungsofen (1) einfahrender Wagen (14) ausgebildet ist, wobei die Wagenplattformen (37) einen Teil des Ofenbodens (38) bilden.

6. Einrichtung nach Anspruch 1 oder 2, dadurch gekennzeichnet, daß der Schrottbehandlungsofen (1) in einer Höhe über dem metallurgischen Ofen (4) angeordnet ist.

7. Einrichtung nach den Ansprüchen 5 und 6, dadurch gekennzeichnet, daß die Chargier- und Dechargiervorrichtung jeweils eine quer zur Förderrichtung (12) der Schrottschurren (10) in der Durchgangskammer (9) zum Schrottbehandlungsofen (1) in vertikaler Richtung hebbare, den Wagen (14) aufnehmende Hubvorrichtung (40) aufweist.

8. Einrichtung nach Anspruch 1 oder 2, dadurch gekennzeichnet, daß die Chargier- und Dechargiervorrichtung als unterhalb des Schrottbehandlungsofens (1) in horizontaler Richtung parallel zur Förderrichtung (12) der Schrottschurren (10) in der Durchgangskammer (9) verfahrbarer Hubwagen (43) mit einer bis in das Innere des Schrottbehandlungsofens (1) einfahrbaren Hebebühne (45) ausgebildet ist.

9. Einrichtung nach Anspruch 2, dadurch gekennzeichnet, daß die nächst der Enden eines Längskanales (17) angeordneten Gasleiteinrichtungen (20) als bewegbare Wände ausgebildet sind, die aus einer den Längskanal (17) absperrenden Position (A) in eine den Längskanal (17) freigebende Position (B) bzw. umgekehrt bewegbar sind.

10. Einrichtung nach Anspruch 1 oder 2, dadurch gekennzeichnet, daß an einer Gasableitung (7) des Schrottbehandlungsofens (1) ein einer Luftvorwärmung dienender Wärmetauscher (31) vorgesehen ist, von dem Warmluftleitrohre (32) in den Innenraum des Schrottbehandlungsofens (1) münden.

11. Einrichtung nach Anspruch 9, dadurch gekennzeichnet, daß die bewegbaren Wände der Gasleitungseinrichtungen (20) als Schwenkklappen ausgebildet sind.

12. Einrichtung nach einem der Ansprüche 1 bis 11, dadurch gekennzeichnet, daß die gasdurchlässige Wand (26) mit einem Gitter oder Rost versehen ist.

**Revendications**

1. Dispositif pour préchauffer la ferraille, comprenant un four de traitement de la ferraille (1) dans lequel débouche au moins une conduite de gaz résiduaire (3) d'un four métallurgique, notamment, d'un convertisseur (4), caractérisé en ce que le four de traitement de la ferraille (1) comprend une chambre à passage traversant (9) destinée à contenir une pluralité des goulottes à ferraille (10) disposées les unes à côté des autres ou les unes au-dessus des autres, et qui sont munies d'une extrémité ouverte (25) et, à l'extrémité opposée, d'une paroi (26) perméable aux gaz, le four de traitement de la ferraille (1) présentant, à une extrémité (5) de la chambre à passage traversant (9), un dispositif de chargement (14; 40; 43) qui reçoit au moins une goulotte à ferraille (10) et, à l'autre extrémité (2) de la chambre à passage traversant (9) un dispositif de déchargement (16; 40; 43) qui reçoit au moins une goulotte à ferraille (10) et en ce que, à l'intérieur de la chambre à passage traversant (9), sont agencés un dispositif transporteur (13) servant à transférer pas à pas la goulotte à ferraille (10) du dispositif de chargement (14; 40; 43) au dispositif de déchargement (16; 40; 43) au dispositif de déchargement (16; 40; 43) ainsi que des dispositifs de guidage du gaz (19, 20) destinés à relier une extrémité d'une goulotte à ferraille (10) à l'extrémité d'une goulotte à ferraille (10) adjacente.

2. Dispositif selon la revendication 1, caractérisé en ce que le four de traitement de la ferraille (1) présente deux canaux longitudinaux (17, 18) dont chacun est disposé latéralement à la chambre à passage traversant (9) et parallèlement à cette chambre, chaque canal longitudinal (17, 18) étant équipé de dispositifs de guidage du gaz (19, 20).

3. Dispositif selon la revendication 1 ou 2, caractérisé en ce que les goulottes à ferraille sont déposées dans la chambre à passage traversant (9) avec leur axe longitudinal (11) orienté transversalement à la direction (12) du transport des goulottes à ferraille (10), et avec leurs deux extrémités au droit d'ouvertures (28) de passage des gaz qui relient respectivement la chambre à passage traversant (9) aux canaux longitudinaux (17, 18).

4. Dispositif selon la revendication 3, caractérisé en ce que les dispositifs de guidage du gaz (19, 20) sont constitués par des cloisons qui ferment les canaux longitudinaux (17, 18) aprés deux goulottes à ferraille (10), une cloison (19) d'un canal longitudinal (17) étant disposée à peu prés au milieu entre deux cloisons adjacentes (19) de l'autre canal longitudinal (18).

5. Dispositif selon la revendication 1 ou 2, caractérisé en ce que le dispositif de chargement et le dispositif de déchargement sont constitués chacun par un chariot (14) que l'on peut introduire dans le four de traitement de la feraille (1) dans la direction transversale à la direction (12) du transport des goulottes à ferraille (10) dans la chambre à passage traversant (9), les plates-formes (37) des chariots formant une partie de la sole (38) du four.

6. Dispositif selon la revendication 1 ou 2, caractérisé en ce que le four de traitement de la ferraille (1) est agencé au-dessus du niveau du four métallurgique (4).

7. Dispositif selon les revendications 5 et 6, caractérisé en ce que le dispositif de chargement et le dispositif de déchargement comprennent chacun un dispositif élévateur (40) qui reçoit le chariot (14) et qui peut s'élever dans la direction verticale, transversalement s'élever dans la direction verticale, transversalement à la direction (12) du transport des goulottes à ferraille (10) dans la chambre à passage traversant (9) pour atteindre le four de traitement de la ferraille (1).

8. Dispositif selon la revendication 1 ou 2, caractérisé en ce que le dispositif de chargement et de déchargement est constitué par un chariot élévateur (43) équipé d'une plate-forme élévatrice (45) que l'on peut introduire jusque dans le volume intérieur du four de traitement de la ferraille (1), ce chariot pouvant circuler au-dessous du four de traitement de la ferraille (1) dans la direction horizontale, parallèlement à la direction (12) du transport des goulottes à ferraille (10) dans la chambre à passage traversant (9).

9. Dispositif selon la revendication 2, caractérisé en ce que les dispositifs (20) de guidage du gaz qui sont disposés à proximité des extrémités d'un canal longitudinal (17) sont constitués par des cloisons mobiles qui peuvent être amenées d'une position (A) qui ferme le canal longitudinal (17) à une position (B) qui libère le canal longitudinal (17), ou inversement.

10. Dispositif selon la revendication 1 ou 2, caractérisé en ce que, sur une conduite d'évacuation du gaz (7) du four de traitement de la ferraille (1), est prévu un échangeur de chaleur (31) qui sert au préchauffage de l'air et d'où partent des tuyaux d'air chaud (32) qui débouchent dans le volume intérieur du four de traitement de la ferraille (1).

11. Dispositif selon la revendication 9, caractérisé en ce que les cloisons mobiles des dispositifs de guidage du gaz (20) sont constitués par des volets oscillants.

12. Dispositif selon une des revendications 1 à 11, caractérisé en ce que la cloison perméable au gaz (26) est munie d,une grille ou d'un grillage.

**Claims**

1. Arrangement for preheating scrap, including a scrap treating furnace (1), into which at least one exhaust gas duct (3) from a metallurgical furnace, in particular a converter (4), enters, characterised in that the scrap treating furnace (1) comprises a through chamber (9) for a plurality of adjacently or superposedly arranged scrap chutes (10), which are provided with an open end (25) and with a gas-permeable wall (26) on the opposite end, the scrap treating furnace (1) comprising a charging means (14; 40; 43) to receive at least one scrap chute (10) on one end (5) of the through chamber (9) and, on the other end (2) of the through chamber (9), a discharging means (16; 40; 43) to receive at least one scrap chute (10), and that a conveying means (13) is arranged within the through chamber (9) for moving the scrap chute (10) in cycles from the charging means (14; 40; 43) to the discharging means (16; 40; 43) as well as gas conducting means (19, 20) for connecting one end of a scrap chute (10) with the end of a neighbouring scrap chute (10).

2. Arrangement according to claim 1, characterised in that the scrap treating furnace (1) includes two longitudinal channels (17, 18), each of which is arranged laterally of and parallel to the through chamber (9), each longitudinal channel (17, 18) being provided with gas conducting means (19, 20).

3. Arrangement according to claim 1 or 2, characterised in that the scrap chutes, within the through chamber (9), are deposited with their longitudinal axes (11) transverse to the conveying direction (12) of the scrap chutes (10) and with their two ends at gas passage openings (28) connecting the through chamber (9) with the longitudinal channels (17, 18).

4. Arrangement according to claim 3, characterised in that the gas conducting means (19, 20) are designed as walls blocking the longitudinal channels (17, 18) after every second scrap chute (10), one wall (19) each of one longitudinal channel (17) being arranged approximately centrally between two neighbouring walls (19) of the other longitudinal channel (18).

5. Arrangement according to claim 1 or 2, characterised in that each of the charging and discharging means is designed as a carriage (14) adapted to be moved into the scrap treating furnace (1) transverse to the conveying direction (12) of the scrap chutes (10) in the through chamber (9), the carriage platforms (37) forming part of the furnace bottom (38).

6. Arrangement according to claim 1 or 2, characterised in that the scrap treating furnace (1) is arranged at a level above the metallurgical furnace (4).

7. Arrangement according to claims 5 and 6, characterised in that each of the charging and discharging means comprises a lifting means (40) to accommodate the carriage (14) and adapted to be lifted in a vertical direction transverse to the conveying direction (12) of the scrap chutes (10) in the through chamber (9) towards the scrap treating furnace (1).

8. Arrangement according to claim 1 or 2, characterised in that the charging and discharging means is designed as a lifting truck (43) adapted to be displaced below the scrap treating furnace (1) in a horizontal direction parallel to the conveying direction (12) of the scrap chutes (10) in the through chamber (9) and having a lifting platform (45) to be movable as far as into the interior of the scrap treating furnace (1).

9. Arrangement according to claim 2, characterised in that the gas conducting means (20) arranged next to the ends of a longitudinal channel (17) are designed as movable walls adapted to be moved from a position (A) blocking the longitudinal channel (17) into a position (B) clearing the longitudinal channel (17), and vice versa.

10. Arrangement according to claim 1 or 2, characterised in that, in a gas discharge duct (7) leading off the scrap treating furnace (1), a heat exchanger (31) is provided for preheating air, hot-air conducting pipes (32) leading from the heat exchanger into the interior of the scrap treating furnace (1).

11. Arrangement according to claim 9, characterised in that the movable walls of the gas conducting means (20) are designed as pivotable flaps.

12. Arrangement according to one of claims 1 to 11, characterised in that the gas-permeable wall (26) is provided with a grid or grate.50z

FIG. 1

FIG. 2

FIG. 3

FIG. 6

FIG. 4

FIG. 5

EP 0 248 971 B1

FIG. 7

FIG. 8

EP 0 248 971 B1